# EUROPEAN PATENT APPLICATION

(11) **EP 2 796 483 A1**
(43) Date of publication of application: **29.10.2014**
(21) Application number: 13165589.6
(22) Date of filing: 26.04.2013
(51) Int. Cl.: C08G 18/76, C04B 24/28, C08K 3/22, C09D 175/04, C08G 18/30, C08G 18/36

(54) **Three component composition for the manufacture of polyurethane cementitious flooring**

(71) Applicant: Sika Technology AG, 6340 Baar (CH)
(72) Inventor: Gimeno, Patricia, 70186 Stuttgart (DE); Kaddatz, Carola, 71546 Aspach (DE); Grötzinger, Jochen, 73525 Schwäbisch Gmünd (DE); Gantner, Hans, 6710 Nenzing (AT)
(74) Representative: Sika Patent Attorneys

(57) **Abstract**

The present invention relates to a three component composition consisting of a polyol component (A) comprising one or more polyols and water, a polyisocyanate component (B) comprising a methylene diphenyl diisocyanate product wherein, based on the sum of methylene diphenyl diisocyanate isomers contained therein, at least 70% by weight of the methylene diphenyl diisocyanate isomers are 4,4'-methylene diphenyl diisocyanate, and a powder component (C) comprising cement, a calcium compound selected from calcium hydroxide and/or calcium oxide, and one or more aggregates.

Polyurethane cementitious hybrid flooring or coating systems having glossy/semiglossy surfaces, good workability and outstanding mechanical properties can be achieved. Blister formation can be avoided.

## Description

### Technical field

The invention relates to a three component composition for the manufacture of polyurethane cementitious hybrid flooring or coating, a method for the manufacture of the flooring or coating with the three component composition and the flooring or coating obtainable by the method.

### Background of the invention

In the prior art, epoxy resin floors show a satisfactory appearance, however suffer on use limitations, and involves amines. Further limitations are imposed by European Union Regulation REACH and exposure scenario concerned with chemical substances so that an alternative chemistry to overcome such limitations is needed.

Polyurethane cementitious hybrid systems are known for the preparation of coating and flooring products having outstanding mechanical properties. However, such PU hybrids systems exhibit mat surfaces which is an unfavorable restriction with respect to aesthetic demands. This is a drawback since the visual aspect of the surface of a coating or flooring is an important feature.

Polyurethane cementitious hybrid systems are complex systems wherein during curing of the precursor components two main reactions occur, namely the reaction of a polyol and a polyisocyanate to form the polyurethane and the reaction of cement and water, generally called hydration. Upon hydration the cement is hardened to a solid material. The hydration is usually effected in the presence of aggregates such as sand or gravel so that the aggregate particles are bound together by the cement material to obtain mortar or concrete. Since both reactions take place in the same mixture, it is almost unavoidable that unwanted side reactions occur. Specifically, the reactive isocyanate compounds can react with water resulting in the generation of amine compounds and CO₂ gas. The generation of CO₂ is a problem since it may lead to blister formation. Moreover, the formation of amines prompts a consecutive side reaction since the isocyanate compounds also react with amines to form urea compounds.

Due to the complex reactions and side reactions, it is difficult to modify the systems without affecting mechanical and workability characteristics and open time.

### Summary of the invention

Therefore, the object of the present invention is to provide a composition for polyurethane cementitious hybrid systems which exhibit surfaces with improved gloss and simultaneously have outstanding mechanical properties and workability properties. Further, blister formation is to be avoided as much as possible.

Surprisingly, this object could be achieved by using a three component composition including a methylene diphenyl diisocyanate product having a high 4,4'-methylene diphenyl diisocyanate isomeric content and a particular powder component. Moreover, further improved results can be achieved when the polyol component, in particular the water content contained therein, is adapted in an appropriate manner with respect to the content of the other ingredients in the composition.

Accordingly, the present invention relates to a three component composition consisting of a polyol component (A) comprising one or more polyols and water, a polyisocyanate component (B) comprising a methylene diphenyl diisocyanate product wherein, based on the sum of methylene diphenyl diisocyanate isomers contained therein, at least 70% by weight of the methylene diphenyl diisocyanate isomers are 4,4'-methylene diphenyl diisocyanate, and a powder component (C) comprising cement, a calcium compound selected from calcium hydroxide and/or calcium oxide, and one or more aggregates.

The inventive three component composition can be used as self-levelling or self-smoothing screed or mortar and unexpectedly enables manufacture of polyurethane cementitious hybrid flooring systems having significantly improved gloss so that glossy/semiglossy surfaces can be achieved. Nevertheless, the characteristics as to workability, open time, mechanical properties such as compressive strength are outstanding. Moreover, blister formation can be avoided, which may affect the surface appearance.

Further benefits are moisture tolerance and fast curing within a period of one day or even less than 15 h for a wide range of temperatures. A top sealer is not necessary so that one day application is possible. Compressive strengths of e.g. 50 N/mm² after 24 h can be achieved. The finished products are easy to clean, stain and scratch resistant. Limitations imposed by REACH can be overcome and the system can be partly based on renewable raw materials such as castor oil.

The system of the invention is particular suited as a polyurethane cementitious hybrid self-levelling screed with glossy/semiglossy surface in combination with heavy duty demands for flooring, especially industrial flooring.

### Detailed description of the invention

Substance names beginning with "poly", such as e.g. polyol or polyisocyanate, designate substances which formally contain, per molecule, two or more of the functional groups occurring in their names.

The term "open time" is understood to mean the duration of processability when the components are mixed with each other. The end of the open time is usually associated with viscosity increase of the composition such that processing of the composition is no longer possible.

The average molecular weight is understood to mean the number average molecular weight, as determined using conventional methods, preferably by gel permeation-chromatography (GPC) using polystyrene as standard (Mw), styrene-divinylbenzene gel with porosity of 100 Angstrom, 1000 Angstrom and 10000 Angstrom as the column and tetrahydrofuran as a solvent, at 35°C.

The compressive strength is determined according to EN 13892-2 (DIN EN 196-1) after 1d, 7d and 28d of curing at 23°C/50% relative humidity.

The term workability encompasses many interrelated terms such as flowability, consistency, mobility, pumpability, plasticity, compactability, stability, and finishibility. These terms are usually of qualitative type. Herein, workability refers to flow/consistency which is determined at 23°C/50% relative humidity using the cone as described in DIN EN 1015-3, but without tamping the material. 1 kg of material (at 23°C/50% relative humidity) are used, 30 sec Component A; 1 min A+B 400 U/min, and 2 min, A+B+C to 700 U/min. The cone is set on the glass sheet, filled to the rim, lifted and the diameter of the resulting circle is determined after 5 min.

The composition of the invention consists of three individual components, which are stored separately in order to avoid spontaneous reaction, and are combined when a polyurethane cementitious hybrid flooring or coating is to be prepared. The components may be assembled together as a package. The three components are a polyol component (A), a polyisocyanate component (B) and a powder component (C) which are also simply referred to as component (A), component (B), and component (C), respectively, which are described in the following.

### Polyol component (A)

The polyol component (A) comprises one or more polyols and water. Optionally, one or more additives may be added.

Examples of suitable polyols are polyoxyalkylenepolyols, also referred to as "polyetherpolyols", polyesterpolyols, polycarbonatepolyols, poly(meth)acrylate polyols, polyhydrocarbon-polyols, polyhydroxy-functional acrylonitrile/butadiene copolymers and mixtures thereof, in particular diols thereof, and mixtures thereof.

Examples of polyetherpolyols are polyoxyethylenepolyols, polyoxypropylenepolyols and polyoxybutylenepolyols, in particular polyoxyethylenediols, polyoxypropylenediols, polyoxybutylenediols, polyoxyethylenetriols and polyoxypropylenetriols. Polyoxyalkylenediols or polyoxyalkylenetriols having a degree of unsaturation of less than 0.02 meq/g and having an average molecular weight in the range from 1000 to 30000 g/mol and polyoxyethylenediols, polyoxyethylenetriols, polyoxypropylenediols and polyoxypropylenetriols having an average molecular weight of from 400 to 8000 g/mol are appropriate.

Further examples of polyetherpolyols are so-called ethylene oxide-terminated ("EO-endcapped", ethylene oxide-end-capped) polyoxypropylenepolyols, styrene-acrylonitrile-grafted polyetherpolyols, e.g. Lupranol^{®} from Elastogran GmbH, Germany.

Particularly preferred polyols to be used in the present invention are polyhydroxy-functional fats and/or oils, for example natural fats and/or oils, such as castor oil, or polyols obtained by chemical modification of natural fats and/or oils, so-called oleochemical polyols. Castor oil is particularly preferred.

Examples of chemically modified natural fats and/or oils are polyols obtained from epoxypolyesters or epoxypolyethers obtained, for example, by epoxidation of unsaturated oils, by subsequent ring opening with carboxylic acids or alcohols, polyols obtained by hydroformylation and hydrogenation of unsaturated oils, or polyols which are obtained from natural fats and/or oils by degradation processes, such as alcoholysis or ozonolysis, and subsequent chemical linkage, for example by transesterification or dimerization, of the degradation products thus obtained or derivatives thereof. Suitable degradation products of natural fats and/or oils are in particular fatty acids and fatty alcohols and fatty acid esters, in particular the methyl esters (FAME), which can be derivatized, for example, by hydroformylation and hydrogenation to give hydroxy-fatty acid esters.

The polyols mentioned above usually have a relatively high molecular weight, for instance, an average molecular weight of from 250 to 30000 g/mol, in particular from 1000 to 30000 g/mol, and/or an average OH functionality in the range from 1.6 to 3.

Further examples of suitable polyols are low molecular weight di- or polyhydric alcohols, e.g., with a molecular weight of less than 250 g/mol. Examples thereof are 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3-and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols, such as xylitol, sorbitol or mannitol, sugars, such as sucrose, other alcohols having a higher functionality, low molecular weight alkoxylation products of the abovementioned di- and polyhydric alcohols, and mixtures thereof.

While said low molecular weight di- or polyhydric alcohols may be used as the polyol, the use of the polyols mentioned above having a high molecular weight is preferred. In a preferred embodiment at least one high molecular weight polyol and at least one low molecular weight di- or polyhydric alcohol are used in combination. As mentioned, a low molecular weight polyol is considered to have a molecular weight of less than 250 g/mol, whereas a high molecular weight polyol is considered to have an average molecular weight of 250 g/mol or more.

In a preferred embodiment component (A) comprises at least one low molecular weight polyol, wherein the at least one low molecular weight polyol is preferably contained in an amount of 4 to 7 % by weight, based on the total weight of component (A), preferably in combination with at least one high molecular weight polyol.

Particularly preferred is a combination of one or more polyhydroxy-functional fats and oils, such natural fats and oils, or polyols obtained by chemical modification of natural fats and/or oils, in particular castor oil, and one, two or more low molecular weight di- or polyhydric alcohols. In such combinations, the one or more polyols having a high molecular weight are usually used in higher amounts than the at least one low molecular weight di- or polyhydric alcohol.

Apart from the one or more polyols and water, component (A) may contain further additives. Such additives are commonly used, if desired, and typically known to the persons skilled in the art of polyurethanes. Examples of optional additives are plasticizers, pigments, adhesion promoters, such as silanes, e.g. epoxysilanes, (meth)acrylatosilanes and alkylsilanes, stabilizers against heat light and UV radiation, thixotropic agents, flow improving additives, flame retardants, surface active agents such as defoamers, wetting agents, flow control agents, deaerating agents, biocides and emulsifiers.

Preferably used optional additives for component (A) are one or more of plasticizers, such as benzoates, benzyl phthalates, e.g. Santicizer^{®}160, and diisopropylbenzene, e.g. Benzoflex^{®}9-88, pigments, such as inorganic and organic pigments, e.g. Bayferrox^{®} and Heucosin^{®}, defoamers, such as solvent silicon free and polyorganosiloxane, e.g. Tego^{®}Airex and Efka^{®}, and emulsifiers such as calcium hydroxide.

While component (A) can be prepared without an emulsifier. The addition of an emulsifier may be suitable since the emulsifier increases stability of component (A) when the emulsion is prepared. A suitable emulsifier is calcium hydroxide. The content of the emulsifier, preferably calcium hydroxide, in component (A) may be for instance in the range of 0 to 0.5% by weight, preferably in the range of 0.01 to 0.5 by weight based on the total weight of component (A).

### Polyisocyanate component (B)

The polyisocyanate component (B) comprises a methylene diphenyl diisocyanate product, wherein, based on the sum of methylene diphenyl diisocyanate isomers contained therein, at least 70% by weight of the methylene diphenyl diisocyanate isomers are 4,4'-methylene diphenyl diisocyanate.

In the following methylene diphenyl diisocyanate is abbreviated as MDI as usual. MDI products are commodity products which are useful materials, e.g. as a starting material for polyurethane production, and produced worldwide in millions of tons annually. A plurality of different MDI product grades is available. MDI products can be classified into monomeric MDI (MMDI) also referred to as pure MDI and polymeric MDI (PMDI) also referred to as technical MDI. Such MDI products are commercially available. The MDI product is preferably monomeric MDI or polymeric MDI or a mixture of monomeric MDI and polymeric MDI.

There exists three isomers of MDI, namely 4,4'-methylene diphenyl diisocyanate (4,4'-MDI), 2,4'-methylene diphenyl diisocyanate (2,4'-MDI), and 2,2'-methylene diphenyl diisocyanate (2,2'-MDI).

The production of MDI is a complex process. MDI is generally produced from a reaction between aniline and formaldehyde wherein usually a catalyst such as hydrochloric acid is used. This reaction produces a complex mixture of polyamines which are phosgenated to obtain a polyisocyanate mixture as a raw product. This raw product is usually split into polymeric MDI and monomeric MDI. Monomeric MDI is a mixture of different MDI isomers or a single MDI isomer. Polymeric MDI is a complex mixture of monomeric MDI and higher homologue, namely the oligomeric species as discussed below. Depending on the reaction, separation and purification processes and possible after-treatment a plurality of MDI product variants are available.

It should be mentioned that polymeric MDI is a common designation for MDI products including a mixture of MDI isomers or a single isomer and oligomeric species as outlined above and explained in more detail below. The term "polymeric" in polymeric MDI does not mean that polymeric MDI contains common polymers of MDI.

Monomeric MDI or pure MDI is a MDI product of a single MDI isomer or isomer mixtures of two or three MDI isomers. The isomeric ratio of MDI isomers can vary in wide ranges. For instance, 4,4'-MDI is a colorless to yellowish solid having a melting point of 39.5°C. Commercial monomeric MDI is often a mixture of 4,4'-MDI, 2,4'-MDI and typically very low levels of 2,2'-MDI.

Polymeric MDI is an MDI product including oligomeric species in addition to MDI isomers. Thus, polymeric MDI contains a single MDI isomer or isomer mixtures of two or three MDI isomers, the balance being oligomeric species. Polymeric MDI tends to have isocyanate functionalities of higher than 2. The isomeric ratio as well as the amount of oligomeric species can vary in wide ranges in these products. For instance, polymeric MDI may typically contain about 30 to 80% by weight of MDI isomers, the balance being said oligomeric species. As in the case of monomeric MDI, the MDI isomers are often a mixture of 4,4'-MDI, 2,4'-MDI and very low levels of 2,2'-MDI. Polymeric MDI is typically a brown or dark amber liquid product at room temperature (23°C).

The oligomeric species are oligomers having a NCO functionality of 3 or higher. The oligomeric species are a result of the synthesis process and can be represented by the following formula 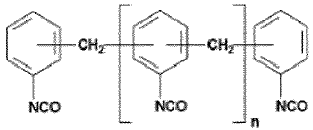 wherein n is 1 to 4 and higher. The amount of the homologues generally decreases with increasing chain length. The total content of homologues with n higher than 4 is generally not very high.

A wide variety of polymeric MDI grades is available with varying characteristics as to the number, type and content of isomers and oligomeric species, isomeric ratio, and weight distribution of the oligomeric homologues. These characteristics depend on type and conditions of synthesis and purification procedures. Moreover, the characteristics can be adjusted, e.g., by mixing different MDI product grades according to the needs of the customer.

MDI products including monomeric MDI and polymeric MDI are commercially available, e.g. Isonate^{®}, Papi^{®} and Voranate^{®} from Dow, Lupranat^{®} from BASF, or Baytec^{®}Enc 88 or Baytec^{®}Enc 5003 from Bayer.

According to the present invention, in the MDI product used the content of 4,4'-MDI may vary in wide ranges, the MDI product may contain e.g. at least 11.5% by weight, and preferably at least 15% by weight of 4,4'-MDI isomer, based on the total weight of the MDI product.

According to the present invention, in the MDI product used at least 70% by weight, preferably at least 80% by weight, more preferably at least 85% by weight and particularly preferably at least 90% by weight of the MDI isomers are 4,4'-MDI, based on the sum of MDI isomers contained in the MDI product. That is, with respect to the MDI isomers contained in the MDI product (4,4'-MDI and optionally 2,4'-MDI and/or 2,2'-MDI), the content of isomer 4,4'-MDI is very high. The oligomeric species, if present, are not considered.

Surprisingly, the use of an MDI product having such a high content of 4,4'-MDI isomer or isomeric ratio, respectively, results in an improved gloss of the finished flooring or coating surfaces prepared. Moreover, use of a MDI product having such a high content of 4,4'-MDI isomer or isomeric ratio, respectively, yields high compressive strength of the finished product.

The MDI product may be momomeric MDI or polymeric MDI, wherein polymeric MDI is generally preferred. The total content of MDI isomers in polymeric MDI may vary. The polymeric MDI (PMDI) used may contain e.g. 55 to 65 % by weight and preferably 35 to 45 % by weight of MDI isomers (4,4'-MDI and optionally 2,4'-MDI and/or 2,2'-MDI), based on the total weight of the MDI product, the balance being said oligomeric species.

Component (B) may optionally comprise in addition to the MDI product one or more additives such as catalysts in relatively small amounts, e.g. less then 4% by weight, preferably less then 1% by weight, more preferably up to 0.05 % by weight of additives altogether, based on the total of component (B). It is, however generally preferred that component (B) consists essentially of the MDI product, preferably monomeric MDI or polymeric MDI or mixtures thereof, if at all including only small amounts of additives, e.g. less then 1 % by weight, e.g. up to 0.05 % by weight of additives altogether. It is also suitable that component (B) consists of the MDI product, preferably monomeric MDI or polymeric MDI or mixtures thereof. Since the MDI products are technical products, they may, of course, include low quantities of impurities.

### Powder component (C)

Component (C) is a powder comprising cement, a calcium compound selected from calcium hydroxide and/or calcium oxide, and one or more aggregates.

As the cement, any conventional cement type or a mixture of two or more conventional cement types may be used, for example, cements classified according to DIN EN 197-1: Portland cement (CEM I), Portland composite cement (CEM II), blast furnace cement (CEM III), pozzolanic cement (CEM IV) and composite cement (CEM V). These main types are divided into 27 subtypes, known to those skilled in the art. Of course, cements produced in accordance with another standard, such as according to ASTM Standard or Indian Standard are also suitable.

Portland cement is the most common type of cement and appropriate for the present invention. A preferred cement is white cement, such a white cement I-52:5. or 42,5 R. White cement is a Portland cement with a low iron oxide content. It is similar to ordinary, gray Portland cement except for its high degree of whiteness.

Component (C) further comprises a calcium compound selected from calcium hydroxide and/or calcium oxide. Calcium hydroxide is also known as hydrated lime, calcium oxide is also known as burnt lime. Calcium hydroxide and calcium oxide can each be purchased as a white powder. The calcium compound selected from calcium hydroxide and/or calcium oxide plays an important role in the composition by controlling workability and avoiding blister formation. It is generally preferred to use either calcium hydroxide or calcium oxide, but a mixture of calcium hydroxide and calcium oxide can also be used.

In addition, component (C) comprises one or more aggregates. Aggregates are chemically inert, solid particulate materials. Aggregates come in various shapes, sizes, and materials ranging from fine particles of sand to large, coarse rocks. Examples of suitable aggregates are sand, such as silica sand, gravel, and crushed stone, slag, calcined flint, lightweight aggregates as clay, pumice, perlite, and vermiculite. Sand, in particular silica sand, is preferably used to reach the workability expected and to obtain a smooth surface.

The grain size of the aggregates is preferably rather small, e.g. less than 2 mm The aggregate may have, for instance, a grain size in the range of 0.06 to 2 mm, wherein sand, in particular silica sand, having a grain size in the range of 0.1 to 1 mm is particularly preferred. For instance, sand having a grain size ranging from 0.3 to 0.8 mm or from 0.1 to 0.5 mm can be advantageously used in the present invention. The grain size range can be determined, e.g. by sieve analysis.

Component (C) may optionally comprise one or more additives which are commonly used, if desired, and typically known to the persons skilled in the art of cement applications. Examples of suitable additives, which may be optionally used in component (C), are superplastizicer such as polycarboxylate ether (PCE); mineral oil, and inorganic or organic pigments.

### Suitable proportions for the three component composition

By adjusting the proportions of the ingredients within the components and between the components as well in a suitable manner, the improvements of the present invention can be significantly enhanced. Such suitable proportions are described in the following. The ingredients indicated refer to the ingredients in the particular component as discussed above. Ratios referring to ingredients in different components relate to suitable or correct proportions of each component according to operating instructions, i.e. to the mixing ratios to be used for mixing the three components and, in use to the mixture of the three components prepared.

The three component composition of the invention is preferably formulated such that the following proportions are satisfied
a) the content of water is in the range of 3.8 to 4.5 % by weight, preferably in the range of 4.1 to 4.3 % by weight,
b) the content of MDI product is in the range of 15 to 18% by weight, preferably in the range of 16 to 17 % by weight, and
c) the content of cement is in the range of 16% to 20 % by weight, preferably in the range of 17 % to 18% by weight,
   based on the total weight of component (A), component (B) and component (C).

Differences in the amount of water can influence not only the finished surface of the product but also the physical properties such as compression strength, workability and open time. Therefore, the proportion of water with respect to the other ingredients is to be determined carefully.

In the powder component, the calcium compound selected from calcium hydroxide (hydrated lime) and/or calcium oxide plays an important role. The absence of the calcium compound selected from calcium hydroxide and/or calcium oxide would lead to formation of very big bubbles on the cured product's surface due to the formation of CO₂ by the reaction of the isocyanate compounds and water present in component (A). Too high amounts reduce workability of the system. Calcium oxide on hydration forms calcium hydroxide and thus serves the same purpose as the calcium hydroxide.

The content of the calcium compound selected from calcium hydroxide and/or calcium oxide may be, e.g., in the range of 1 to 4.0 % by weight, preferably in the range of 3 to 3.5 % by weight, based on the total weight of component (A), component (B) and component (C).

Moreover, the three component composition of the invention is preferably formulated such that at least one of the following weight ratios is satisfied:
a) the weight ratio of water to MDI product is in the range of 0.2 to 0.3 preferably in the range of 0.24 to 0.26,
b) the weight ratio of water to cement is in the range of 0.2 to 0.3, preferably in the range of 0.21 to 0.26, and/or
c) the weight ratio of cement to MDI product is in the range of 0.8 to 1.3, preferably in the range of 0.9 to 1.2.

The weight ratio of water to the calcium compound selected from calcium hydroxide and/or calcium oxide in the three component composition is e.g. generally in the range of 1 to 4,5 and preferably in the range of 1.5 to 3

The molar ratio of alcoholic OH groups to NCO groups in the three component composition is preferably in the range of from 3.7 to 4.3 and more preferably in the range of from 3.8 to 4.2. Said molar ratio further improves compressive strength of the finished product. The molar ratio can easily be determined via the equivalent weights of the polyols and polyisocyanates used.

The following proportions given for component (A) and for component (C) are preferred ranges, but it should be considered that these proportions depend to a considerable extent also on the mixing ratio of the three components to be used. Thus, the ranges indicated are particularly suitable for a mixing ratio by weight of components (A), (B) and (C) of about 16.5 : 16.5 : 67. Similar results may be achieved, when e.g. the proportion of component (C) in the mixing ratio is increased and the content of cement and calcium compound in component (C) is decreased at the same time.

Component (A) is preferably formulated such that the water content is in the range of 24 to 27 % by weight, preferably 25 to 26 % by weight, and in particular 25 to 25.5 % by weight, and/or the polyol content, preferably the high molecular weight polyol content, is in the range of 38 to 42 % by weight, preferably 40 to 42 % by weight, each based on the total weight of component (A). In a preferred embodiment at least one high molecular weight polyol and at least on low molecular polyol are contained in component (A). In this case, the content of high molecular weight polyol such as castor oil is e.g. in the range of 38 to 42 % by weight, preferably 40 to 42 % by weight, and the content of low molecular weight polyol is e.g. in the range of 4 to 7% by weight, each based on the total weight of component (A). Generally, if at least one low molecular weight polyol is contained in component (A), its content is preferably in the range of 4 to 7% by weight, based on the total weight of component (A).

Component (C) is preferably formulated such that at least one of the following conditions is fulfilled, each based on the total weight of component (C):
a) the cement content is in the range of 25 to 30% by weight, preferably 26.5 to 28.5 % by weight,
b) the content of calcium compound selected from calcium hydroxide and/or calcium oxide is in the range of 1 to 6 % by weight or 2 to 6 % by weight, preferably 4.5 to 5.5 % by weight,
c) the aggregates content, preferably sand, is in the range of 65 to 75 % by weight, preferably 68 to 70 % by weight.

In a preferred embodiment, both component (A) and component (C) are formulated according to the proportions outlined above. Moreover, it is preferred that component (C) consist essentially of the MDI product or consists of the MDI product.

As to the mixing ratio of components (A), (B) and (C), the weight ratio of component (A) to component (B) is preferably in the range of 0.8 to 1.4, and more preferably in the range of 1.0 to 1.2. The weight ratio of components (A+B) to component (C) is preferably in the range of 0.4 to 0.5, and more preferably in the range of 0.47 to 0.49 wherein components (A+B) represents the combined weight of component (A) and component (B). A particularly preferred mixing ratio by weight of components (A), (B) and (C) is about 16.5 : 16.5 : 67. Said mixing ratios are particularly preferred, if components (A), (B) and (C) are formulated according to the proportions outlined above.

### Method for the manufacture of a polyurethane cementitious hybrid flooring or coating

The three component composition of the invention is suitable to prepare a polyurethane cementitious hybrid flooring or coating. The method comprises
a) mixing polyol component (A) and polyisocyanate component (B),
b) adding the powder component (C) to the mixture of polyol component (A) and polyisocyanate component (B) and mixing, to obtain a mixed material,
c) applying the mixed material to a substrate,
d) optionally smoothing the applied mixed material, and
e) curing the applied mixed material, to obtain the polyurethane cementitious hybrid flooring or coating.

A typical layer thickness e.g. ranges from 2 to 6 mm. The application temperature is preferably from about 12 to 35°C. Fast curing in less than 24 h for a wide range of temperatures can be achieved. Application of a top sealer is not required so that one day application is possible.

High compressive strengths can be achieved. The compressive strength of the flooring or coating obtained is preferably at least 45 N/mm², e.g. in the range of 45 to 55 N/m², preferably in the range of 50 to 55 N/m² at 23°C/50% relative humidity after 1 day after application, and preferably at least 50 N/mm², more preferably at least 58 N/mm², e.g. in the range of 58 to 68 N/m², preferably 62 to 65 N/m² after 28 days.

The three component composition is suitable as a self-levelling system or screed. The methods provides flooring and coating systems having a glossy/semiglossy surface, and outstanding properties as to mechanical properties such as compressive strength, open time and workability.

The invention is further explained in the following experimental part which, however shall not be construed as limiting the scope of the invention. The proportions and percentage indicated are by weight, unless otherwise stated.

### Examples

### Component (A)

The ingredients indicated below are mixed to form component (A). The amounts given are in parts by mass.

| | |
|---|---|
| castor oil LV-117 | 42 - 49 |
| plasticizer | 20 - 17 |
| defoamer | 2 - 5 |
| pigment | 3 - 8 |
| water | 24 - 27 |

### Component (B)

Component (B) consists of an MDI product. The composition of the MDI product used is as follows: 36.75% by weight 4,4'-MDI, 3.71 % by weight 2,4'-MDI, the balance being oligomeric species. Thus, the proportion of 4,4-MDI, based on the monomeric isomers included, is 90.83% by weight.

### Component (C)

The ingredients indicated below are mixed to form component (C). The amounts given are in parts by mass.

| | |
|---|---|
| silica sand, 0.1-0.5 mm | 65 - 75 |
| hydrated lime | 2 - 6 |
| white cement CEM 1 52,5 N | 25 - 30 |

### Composition mixture

Components (A), (B) and (C) are mixed in a weight ratio to obtain a mixture as indicated below, e.g. a weight ratio of about 16.5, 16.5 and 67, respectively, was used. The portion of each ingredient is given in % by weight, based on the total weight of the mixture.

| | A+B+C (%) |
|---|---|
| castor oil LV-117 | 6.9 - 8.1 |
| plasticizer | 2.7 - 3.7 |
| defoamer | 0.3 - 0.8 |
| pigment | 0.4 - 1.4 |
| water | 3.8 - 4.5 |
| MDI product | 15 - 18 |
| silica sand, 0.1-0.5 mm | 45 - 55 |
| hydrated lime | 1 - 4 |
| white cement CEM 1 52,5 N | 16 -20 |

A number of variants have been studied within the indicated range. The workability of the mixed material indicated was found to be appropriate. The mixed material was applied to a substrate in order to prepare a flooring. The flooring obtained exhibit a pleasant glossy surface appearance.

For component (A), a number of variants has been studied, wherein the content of castor oil has been fixed, and the content of the other ingredients have been varied.

With respect to the system indicated, the proportion of water in the system was studied in various laboratory tests in view of application, workability and open time. We have determined that the range of percentage of water in component (A) for this system should be preferably from 24% to 27%. Amounts less than 24% may lead to formation of blisters, as well as a significant decrease in workability. Higher amounts, for example more than 27% reduces "gloss".

In the system indicated with a proportion of white cement of 26%, an outstanding compressive strength of the finished flooring is achieved, namely more than 50 N/mm² after 28 days. Decreasing the amount of cement in this system result in a decrease in compressive strength achieved. Apart from that, the proportion of cement in the system influences workability and open time.

The content of hydrated lime in component (C) is preferably about 5%. If considerably lower amounts are used, blister formation may occur. Too high amounts of hydrated lime reduce workability of the system.

In order to test the influence of the ratio of component A to component B, the weight ratio of component A to component B was varied while maintaining the ratio of the weight sum of components A and B compared to weight of component (C) as shown below.

| (A+B) | A:B | C |
|---|---|---|
| 33 | 0.8 | 67 |
| 33 | 1 | 67 |
| 33 | 1.2 | 67 |
| 33 | 1.4 | 67 |

While the tests all show satisfactory results, the best compromise between workability and surface appearance was achieved with a ratio of A:B = 1. Workability decreases for A:B > 1. On the other hand, some blister formation may occur at a temperature of higher than 35°C when A:B << 1.

## Claims

1. Three component composition consisting of
A) a polyol component (A) comprising one or more polyols and water,
B) a polyisocyanate component (B) comprising a methylene diphenyl diisocyanate (MDI) product wherein, based on the sum of methylene diphenyl diisocyanate isomers contained therein, at least 70% by weight of the methylene diphenyl diisocyanate isomers are 4,4'-methylene diphenyl diisocyanate, and
C) a powder component (C) comprising cement, a calcium compound selected from calcium hydroxide and/or calcium oxide, and one or more aggregates.

2. Three component composition according to claim 1, wherein the methylene diphenyl diisocyanate (MDI) product is monomeric methylene diphenyl diisocyanate or polymeric methylene diphenyl diisocyanate or a mixture thereof, wherein polymeric methylene diphenyl diisocyanate is preferred.

3. Three component composition according to claim 1 or claim 2, wherein the polyisocyanate component (B) consists essentially of the methylene diphenyl diisocyanate (MDI) product, preferably monomeric methylene diphenyl diisocyanate or polymeric methylene diphenyl diisocyanate or a mixture thereof.

4. Three component composition according to any of claims 1 to 3, wherein
a) the content of water is in the range of 3.8 to 4.5 % by weight,
b) the content of the methylene diphenyl diisocyanate (MDI) product is in the range of 15 to 18 % by weight, and
c) the content of cement is in the range of 16 to 20 % by weight, based on the total weight of component (A), component (B) and component (C).

5. Three component composition according to any of claims 1 to 4, wherein
a) the weight ratio of water to methylene diphenyl diisocyanate (MDI) product is in the range of 0.2 to 0.3
b) the weight ratio of water to cement is in the range of 0.2 to 0.3, and/or
c) the weight ratio of cement to methylene diphenyl diisocyanate product is in the range of 0.8 to 1.3.

6. Three component composition according to any of claims 1 to 5, wherein the weight ratio of water to the calcium compound selected from calcium hydroxide and/or calcium oxide is in the range of 1 to 4.5.

7. Three component composition according to any of claims 1 to 6, wherein the molar ratio of alcoholic OH groups to NCO groups is in the range of 3.7 to 4.3.

8. Three component composition according to any of claims 1 to 7, wherein at least one polyol of component (A) is a polyhydroxy-functional fat and/or oil or a polyol obtained by chemical modification of a natural fat and/or oil, wherein the polyol is preferably castor oil.

9. Three component composition according to any of claims 1 to 8, wherein component (A) comprises 24 to 27 % by weight of water, based on the total weight of component (A), and/or wherein component (A) comprises 39 to 42 % by weight of one or more high molecular weight polyols, preferably castor oil, based on the total weight of component (A).

10. Three component composition according to any of claims 1 to 9, wherein component (A) comprises at least one low molecular weight polyol, wherein the at least one low molecular weight polyol is preferably contained in an amount of 4 to 7 % by weight, based on the total weight of component (A).

11. Three component composition according to any of claims 1 to 10, wherein component (A) comprises 0 to 0.5 %, preferably 0.01 to 0.5 % by weight of calcium hydroxide as emulsifier, based on the total weight of component (A).

12. Three component composition according to any of claims 1 to 11, wherein component (C) comprises
a) 25 to 30 % by weight of cement,
b) 1 % to 6 % by weight of the calcium compound selected from calcium hydroxide and/or calcium oxide, and
c) 65 to 75 % by weight of aggregates, preferably sand, based on the total weight of component (C).

13. Three component composition according to any of claims 1 to 12, wherein the weight ratio of component (A) to component (B) is in the range of 0.8 to 1.4, and/or wherein the weight ratio of components (A+B) to component (C) is in the range of 0.4 to 0.5, wherein components (A+B) represents the combined weight of component (A) and component (B).

14. Method for the manufacture of a polyurethane cementitious hybrid flooring or coating with a three component composition according to any of claims 1 to 13, wherein the method comprises
a) mixing polyol component (A) and polyisocyanate component (B),
b) adding the powder component (C) to the mixture of polyol component (A) and polyisocyanate component (B) and mixing, to obtain a mixed material,
c) applying the mixed material to a substrate,
d) optionally smoothing the applied mixed material, and
e) curing the applied mixed material, to obtain the polyurethane cementitious hybrid flooring or coating.

15. Flooring or coating, obtainable by the method of claim 14.
